# EUROPEAN PATENT SPECIFICATION

(11) **EP 3 297 901 B1**
(45) Date of publication and mention of the grant of the patent: **30.12.2020**
(21) Application number: 16731672.8
(22) Date of filing: 23.05.2016
(51) Int. Cl.: B62M 6/50

(54) **TORQUE SENSOR FOR PEDAL-DRIVEN VEHICLES AND APPARATUS**
DREHMOMENTSENSOR FÜR PEDALANGETRIEBENE FAHRZEUGE UND VORRICHTUNG
CAPTEUR DE COUPLE POUR DES VÉHICULES À PÉDALES ET APPAREIL

(30) Priority: 22.05.2015 NL 1041317
(43) Date of publication of application: 28.03.2018
(73) Proprietor: IDbike B.V., 5133 NE Riel (NL)
(72) Inventor: D'HERRIPON, Bastiaan Andreas, 5053 EE Goirle (NL)
(74) Representative: Griebling, Onno
(86) International application number: PCT/NL2016/000014
(87) International publication number: WO 2016/190729

(56) References cited:
- EP-A1- 2 319 754
- EP-A1- 2 470 417
- EP-A2- 1 110 856
- WO-A1-2011/074947
- US-B1- 6 196 347

## Description

### FIELD OF THE INVENTION

The present invention relates in general to the field of pedal-driven vehicles in general, and bicycles in particular. For the sake of simplicity, the invention will be explained for the example of bicycles, but the invention is likewise applicable in other types of pedal-driven vehicles. Typically, in bicycles, the cyclist drives the pedals by using his feet, but vehicles exist where cranks are driven by hand, and it is to be noted that the invention is also applicable to such hand-driven vehicles. Further, while a vehicle has wheels for displacement on a road, a pedal-driven apparatus may for instance include a training device, a spinning bike, etc, and it is to be noted that the invention is also applicable to such pedal-driven apparatus.

### BACKGROUND OF THE INVENTION

It is desirable to have a sensor for measuring the force or torque exerted by the driver of a bicycle, i.e. the cyclist. Such measurement is for instance useful in the context of training, if one wishes to determine the amount of calories produced by the cyclist. Such measurement is also useful in the context of an electrically-assisted bicycle, which is equipped with an electric motor that is to exert driving power to the bicycle in proportion to the pedal torque.

The drive train from cyclist to road comprises the pedals, the cranks, the crank chain wheel, the chain, the rear axle chain wheel, the rear axle. Basically, there are three positions where the measurement could take place: before the chain, in the chain, after the chain. It is however a problem that the drive train consists of components moving with respect to the bicycle frame. Therefore, alternative solutions have been proposed, where the deformation of a frame part is measured; reference in this respect is for instance made to international patent publications WO-01/30643, WO-03/073057, and WO-2006/091089. These documents give more background information.

EP 1 110 856 A2 is considered as the closest prior art, and discloses the following features of claims 1 and 9: Crank-driven vehicle or apparatus, comprising: - a bottom bracket; - a crank set that includes a crank axle mounted for rotation with respect to the bottom bracket, a pair of cranks attached to the crank axle and provided with respective user interface members; - a chain wheel associated with the crank set and arranged coaxially with respect to the crank axle for driving a chain; - a crank torque sensor assembly responsive to torque exerted by the user to provide an electrical measuring, signal proportional to the torque exerted by the user; wherein the crank torque sensor assembly comprises - a planetary system that includes: -- a ring wheel; -- a sun wheel fixed with respect to the chain wheel; -- and a plurality of planetary wheels arranged in between the ring wheel and the sun wheel, the planetary wheels being mounted on a disc-shaped planet carrier; - a reaction torque sensor assembly arranged between the ring wheel and the bottom bracket; wherein the planet carrier is fixed coaxially to the crank axle; wherein the planetary wheels are mounted for rotation on respective carrier axles that in turn are mounted on the planet carrier, at the side of the planet carrier; wherein the sun wheel is arranged coaxially around the crank axle such as to be able to rotate with respect to the crank axle; wherein the chain wheel is attached to the sun wheel, at the side of the sun wheel.

Although these prior proposals provide good measuring results, it is a disadvantage that their implementation requires substantial amendments to the bicycle frame. It would be advantageous to have a measuring sensor that can be implemented even in existing bicycles without the need to adapt the bicycle frame at all, or in any case without the need to make substantial amendments to the bicycle frame.

A measuring sensor associated with the crank set would meet that need. However, a crank set is a rotating part, and having a sensor associated with a rotating part involves the problem of transferring the measuring signals to a stationary signal processor and, in the case of an electrically-assisted drive, to the controller for the auxiliary motor. By way of example, reference is made to US-7806006, which discloses a system that involves crank arms provided with strain gauges and built-in power supply, signal processing and wireless signal transfer.

US-2013/0086996 discloses a torque sensor for a crank set that includes a rotating tube driven by the crank axle via a resilient member. Thus, there is a shift angle between the rotating crank axle and the rotating tube depending on the exerted torque. Two measuring discs are arranged in close proximity of each other, one being attached to the crank axle and the other being attached to the rotating tube; thus, there is a shift angle between the two measuring discs. The measuring discs rotate in a slot of a stationary sensor that is capable of detecting the shift angle between the two measuring discs. This is done by counting a number of overlapping openings in both discs. Consequently, a torque sensor output signal can only have one of a plurality of predetermined discrete values, and can not give an analogue output signal.

An objective of the present invention is to provide a measuring system for the rotating crank set, wherein the measuring system comprises a stationary torque measuring element. In an embodiment, the present invention provides a stationary deformation component that exhibits a mechanical deformation in proportion to the torque in the crank set. A deformation sensor, for instance including a strain gauge, can then easily be attached to such stationary deformation component, and its measuring signals can easily be communicated to a stationary signal processor via a wire connection.

### SUMMARY OF THE INVENTION

An object of the present invention is to provide a new type of torque sensor that has relatively simple and compact design, and that allows measuring the torque in rotating components without the problems of the need to transfer measuring signals wirelessly.

A crank-driven vehicle according to the present invention has the features of claim 1. It is noted that a planetary system for use in a bicycle has already been disclosed in EP-1.110.856, but the structure disclosed in this document is a complicated structure which requires the standard bottom bracket to be replaced by a specially designed housing for accommodating the system. The design of the present invention has the advantage of an axially compact build, which basically comprises a stack of three disc-shaped component arranged between the bottom bracket and the chain wheel. The chain wheel attached to the sun wheel can be considered a fourth component of the stack. Such four-component stack can be provided as a replacement kit for a normal chain wheel, even in the case of existing bicycles.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figure 1 schematically shows a cross-section of a crank set provided with a torque sensor according to the present invention;
figure 2 schematically illustrates a possible embodiment of a deformation member in a torque sensor according to the present invention;
figure 3 is a block diagram, schematically illustrating a bicycle comprising a crank set provided with a torque sensor according to the present invention.

### DETAILED DESCRIPTION OF THE INVENTION

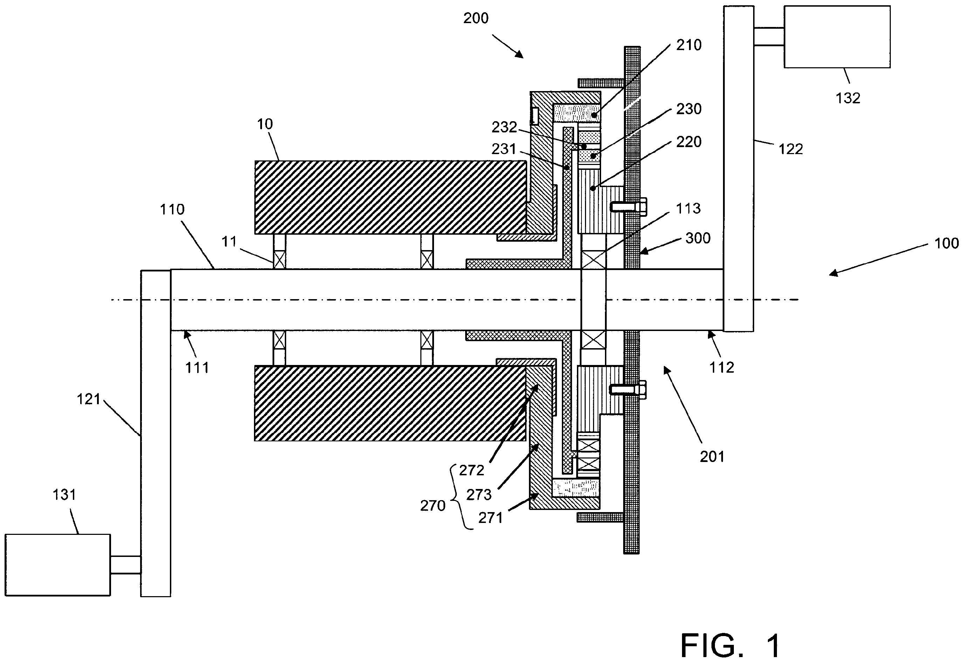

Figure 1 schematically shows a cross-section of a crank set 100 provided with a crank torque sensor assembly 200 according to the present invention.

The crank set 100 comprises a crank axle 110, a first crank 121 with a first pedal 131 mounted at a first end 111 of the crank axle 110, and a second crank 122 with a second pedal 132 mounted at a second end 112 of the crank axle 110. The crank axle 110 is mounted for rotation in a bottom bracket 10 of a bicycle frame. Other components of the bicycle are not shown for sake of simplicity. A bearing of the crank axle 110 with respect to the bottom bracket 10 is indicated at 11.

The crank torque sensor assembly 200 according to the present invention has a planetary design. Since planetary gear systems are known per se, a detailed description and explanation is omitted here. Suffice it to say that a planetary gear system 201 comprises three main functional elements, i.e. a ring wheel 210, a sun wheel 220, and a planet system with a plurality of planetary wheels 230 arranged in between the ring wheel 210 and the sun wheel 220.

In the embodiment shown, the ring wheel 210 is mounted stationary with respect to the bottom bracket 10.

The planetary wheels 230 are mounted on a planet carrier 231 that is fixed with respect to the crank axle 110. Particularly, each planetary wheel 230 is mounted for rotation with respect to a carrier axle 232 which in turn is mounted on a common carrier 231, which carrier may have a disc shape. The number of planetary wheels 230 is not critical; a suitable number is 3 or 4, but a higher number is also possible. The higher the number of planetary wheels 230, the less load each of those planetary wheels needs to accommodate.

Reference numeral 300 indicates a chain wheel for engaging a drive chain. In standard crank sets, the chain wheel is attached to the crank axle 110 and/or the right-hand crank 122, but in the design according to figure 1 of the present invention the chain wheel 300 is attached to the sun wheel 220. The combination of sun wheel 220 and chain wheel 300 may be free with respect to the crank axle 110, held in place by the planetary wheels 230, but it is also possible that one or more bearings 113 are arranged between the sun wheel 220 and chain wheel 300 on the one hand and the crank axle 110 on the other hand, for increased stability.

As should be clear to a person skilied in the art, the planetary wheels 230 engage the ring wheel 210 and the sun wheel 220. When the cyclist steps on the pedals 131, 132 to rotate the crank axle 110, the crank axle 110 takes along the planet carrier 231 and thus the planetary wheels 230 orbit around the crank axle 110. Since the orbiting planetary wheels 230 engage the stationary ring wheel 210, they rotate around their respective carrier axles 232, and consequently they drive the sun wheel 220 for rotation with respect to the stationary ring wheel 210 and with respect to the crank axle 110. Particularly, it will be seen that the sun wheel 220 and hence the chain wheel 300 will rotate at higher speed than the crank axle 110. It will be clear that the following formula applies: ${ω}_{S} / {ω}_{C} = 2 {R}_{C} / {R}_{S}$ (1)
wherein ω_{S} indicates the angular speed of the sun wheel and the chain wheel;
ω_{C} indicates the angular speed of the crank axle and the planet carrier;
R_{S} indicates the radius of the sun wheel;
R_{C} = R_{S} + R_{P} indicates the radius of the position of the carrier axles 232
R_{P} indicates the radius of the planetary wheels.

In an exemplary embodiment, R_{S} = 21 mm and Rp = 7 mm, so that the chain wheel 300 will rotate at a speed which is a factor ω_{S}/ω_{C} = 2.67 higher than the rotary speed of the crank axle 110. Such higher speed already provides an advantage because, with a view to having the same transfer ratio between crank set and driven wheel, the chain wheel 300 can have a radius that is reduced by the same factor. With such smaller chain wheel, vertical distance between upper chain half and lower chain half will be lower, and the protective chain guard can have a much more attractive, slim design.

If losses are neglected, the output torque To delivered at the chain wheel 300 is reduced by the same factor, according to the following formula: ${T}_{o} / {T}_{i} = {R}_{S} / 2 {R}_{C}$ (2) wherein Tᵢ indicates the input torque inputted by the driver at the crank axle 110.

An important aspect is that the ring wheel 210 receives from the planetary wheels 230 a reaction torque Tr equal to the difference beteen input torque Ti and output torque To: ${T}_{R} = {T}_{i} - {T}_{o} = {T}_{i} ⋅ \left(1-{R}_{S}/2{R}_{C}\right)$ (3) It should be clear that the reaction torque Tr is proportional to the input torque Ti. Thus, measuring the reaction torque Tr is equivalent to measuring the input torque Ti. In the above example, T_{R} = 0.6-Tᵢ.

As mentioned above, a planetary gear system comprises three functional elements, i.e. a sun wheel, a ring wheel, and a planetary system. As a matter of principle, each one of these elements can be connected to the torque input (i.e. crank), while any second one of these elements can be connected to the torque output (i.e. chain wheel), while the remaining third element can be connected to the stationary frame. Six configurations are possible. In each of those configurations, the third element will receive a reaction torque, but it is positionally fixed with respect to the frame. Thus, the third element exerts a reaction torque on the frame cq bottom bracket.

According to a further aspect of the present invention, the crank torque sensor assembly 200 comprises a reaction torque sensor assembly 270 arranged between the bottom bracket 10 and the said third element, i.e. the ring wheel 210 in the embodiment of figure 1. The reaction torque sensor assembly 270 comprises a first part 271 that is attached to the ring wheel 210 and a second part 272 that is attached to the bottom bracket 10. Between the first part 271 and the second part 272, the reaction torque sensor assembly 270 comprises an intermediate deformation part 273 that is elastically deformable. The reaction torque sensor assembly 270 is provided with a deformation sensor 280 sensing the deformation of the intermediate deformation part 273 and providing an electrical output signal proportional to the sensed deformation.

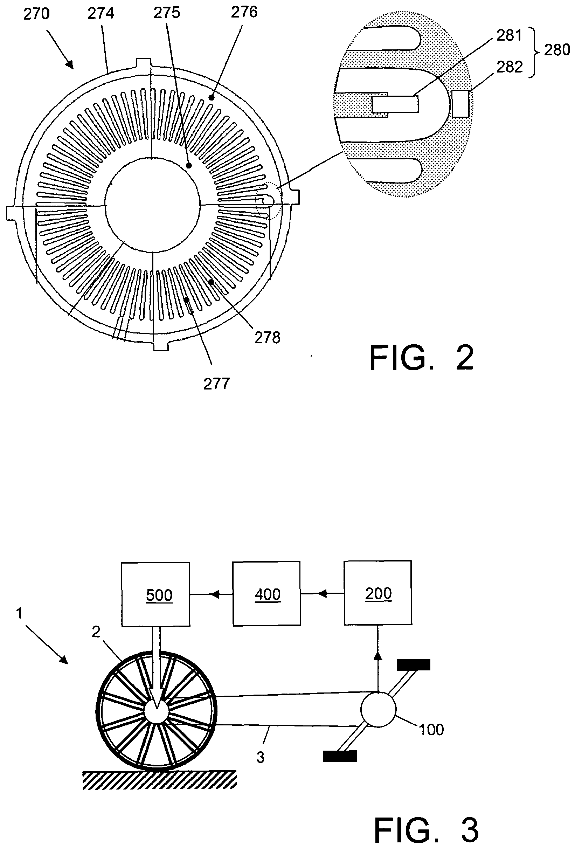

Figure 2 schematically shows an example of a particularly suitable embodiment of the reaction torque sensor assembly 270. In this embodiment, the reaction torque sensor assembly 270 comprises a disc 274 with an annular inner ring portion 275 and an annular outer ring portion 276. Radial slits 277 define a plurality of radial spokes 278 that connect the inner ring portion 275 and the annular outer ring portion 276. The exact number of spokes 278 is not essential. However, the width of the spokes 278 should be such as to allow some bending, as will be clear from the following.

The ring wheel 210 is attached to the annular outer ring portion 276, which hence constitutes the first part 271. The bottom bracket 10 (or another portion of the bicycle frame) is attached to the annular inner ring portion 275, which hence constitutes the second part 272. The radial spokes 278 constitute the intermediate deformation part 273. The spokes 278 define a connection between the inner ring portion 275 and the annular outer ring portion 276 that is quite stiff for mutual displacement in radial direction. In angular direction, however, the stiffness is less, and the reaction torque Tr will cause a slight angular displacement of the annular outer ring portion 276 with respect to the annular inner ring portion 275, with the radial spokes 278 bending elastically.

The reaction torque sensor assembly 270 may be provided with a deformation sensor for measuring the deformation of a spoke to thus measure the deformation of the intermediate deformation part 273. Such deformation sensor may comprise a strain gauge. Since the use of strain gauges for measuring bending of spokes is known per se, a more detailed explanation is omitted here.

Applying strain gauges, however, is complicated. Therefore, the drawing shows a preferred embodiment where the angular displacement between the annular outer ring portion 276 and the annular inner ring portion 275 is measured directly. As is illustrated more clearly in the enlargement, at least one of the spokes is interrupted. The interruption may be located in a mid section of such spoke, but the interruption may also be located at an end section of such spoke. When the annular outer ring portion 276 is displaced with respect to the annular inner ring portion 275, this interrupted spoke will not bend and thus there will be a displacement between the spoke portions at opposite sides of the interruption. In the example shown, the interruption is located at the outer end of the spoke, so that this spoke does not connect to the annular outer ring portion 276. Consequently, when the annular outer ring portion 276 is displaced with respect to the annular inner ring portion 275, there will be a displacement between the free outer end of this spoke and the annular outer ring portion 276. A displacement sensor 280 comprises a small magnet 281 attached to the free outer end of the interrupted spoke and a small Hall sensor 282 attached to the outer ring portion 276. The electrical output signal of the Hall sensor is linearly proportional to the angular displacement of the outer ring portion 276, and hence linearly proportional to the reaction torque Tr and to the input torque Ti. Displacement sensors on the basis of a Hall sensor are known per se, therefore a more detailed explanation is omitted here.

It will thus be seen that the actual signal generator, which converts a mechanical parameter to an electrical signal, is a stationary component, so that the complication of wireless signal transfer can be avoided.

Figure 3 is a block diagram, schematically illustrating a bicycle 1 comprising a crank set 100 provided with a crank torque sensor assembly 200 according to the present invention. The crank set 100 drives a chain 3 that in turn drives a rear wheel 2. The crank torque sensor assembly 200 provides a measuring output signal to a control device 400, which controls an auxiliary motor 500 on the basis of the received measuring signal, such that the auxiliary motor 500 provides more drive power as the cyclist produces more torque. In the block diagram, the auxiliary motor 500 is shown to drive the rear wheel 2, but alternatively the auxiliary motor 500 may be arranged to drive the front wheel, or to drive the crank set.

Thus, the use of a planetary system in a crank torque sensor assembly for an electrically assisted bicycle is described. The bicycle comprises a crank set that includes a crank axle mounted for rotation with respect to a bottom bracket, and a chain wheel for driving a chain. The crank torque sensor assembly comprises a planetary system that includes a ring wheel, a sun wheel, and a plurality of planetary wheels mounted on a planet carrier. The ring wheel is stationary with respect to the frame part. The sun wheel is attached to the chain wheel. The planet carrier is attached to the crank axle. The crank torque sensor assembly comprises a deformation member arranged between the ring wheel and the bottom bracket, and provides an electrical measuring signal proportional to the torque exerted by the cyclist.

It can be seen in figure 1 that the crank torque sensor assembly 200 of the present invention is very compact, and can be arranged in the small space (having small axial extent) between bottom bracket 10 and chain wheel 300. Basically, the crank torque sensor assembly 200 of the present invention comprises a stack of three disc-shaped elements. As seen in the axial direction from the chain wheel 300 to the bottom bracket 10, i.e. from the right to the left in figure 1, a first one of said disc-shaped elements is the sun wheel 220, that is mounted against the chain wheel 300, while the chain wheel 300 can in fact be a standard chain wheel.

A second one of said disc-shaped elements is the planet carrier 231, that is mounted at a short axial distance from the sun wheel 220. The carrier axles 232 carrying the planetary wheels 230 extend from the disc-shaped planet carrier 231 towards the chain wheel 300 and the sun wheel 220, i.e. to the right, while a mounting bush integral with or fixed to the disc-shaped planet carrier 231 extends in the opposite direction, into the cavity of the bottom bracket 10. The mounting bush has an inner diameter corresponding to the outer diameter of the crank axle 110, and is affixed to the crank axle 110.

A third one of said disc-shaped elements is the reaction torque sensor assembly 270, of which the annular inner ring portion 275 is positioned against the axial end face of the bottom bracket 10 and is affixed thereto. The ring wheel 210 of the planetary system is affixed to the opposite side of the annular outer ring portion 276, i.e. at the righthand side in figure 1.

A cylindrical wall having an inner diameter slightly larger than the outer diameter of the annular inner ring portion 275 / ring wheel 210 combination is affixed to the frame side (lefthand side) of the chain wheel 300, overlapping with the annular inner ring portion 275 / ring wheel 210 combination to form a protective enclosure for the planetary system.

In a prototype embodiment, the axial size of the package, measured from the axial end face of the bottom bracket 10 up to and including the chain wheel 300, measures around 30 mm.

In a prototype embodiment, the disc 274 of the reaction torque sensor assembly 270 was an aluminium disc. Other metals are feasible as well. As an alternative, the disc 274 may be a plastic disc, particularly a solid disc. With a suitable selection of material and thickness, the disc will have a suitable stiffness without the necessity of forming grooves. A recess or through-hole may be arranged in the disc for mounting the Hall sensor, although of course an interrupted spoke may still be used.

It should be clear to a person skilled in the art that the present invention is not limited to the exemplary embodiments discussed above, but that several variations and modifications are possible within the protective scope of the invention as defined in the appended claims. For instance, two or more functions may be performed by one single entity. Any reference signs in a claim should not be construed as limiting the scope of that claim.

In the above, the present invention has been explained for the example of a bicycle. Such bicycle may be provided with the inventive crank torque sensor assembly already in the factory. However, an advantage of the inventive torque sensor is that it can easily be implemented as a replacement kit for application with existing bicycles.

In the above, the present invention has been explained with reference to block diagrams, which illustrate functional blocks of the device according to the present invention. It is to be understood that one or more of these functional blocks may be implemented in hardware, where the function of such functional block Is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

## Claims

1. Crank-driven vehicle or apparatus (1), comprising:
- a bottom bracket (10);
- a crank set (100) that includes a crank axle (110) mounted for rotation with respect to the bottom bracket (10), a pair of cranks (121; 122) attached to the crank axle (110) and provided with respective user interface members (131; 132);
- a chain wheel (300) associated with the crank set (100) and arranged coaxially with respect to the crank axle (110) for driving a chain (3);
- a crank torque sensor assembly (200) responsive to torque exerted by the user to provide an electrical measuring signal proportional to the torque (Ti) exerted by the user;
wherein the crank torque sensor assembly (200) comprises
- a planetary system (201) that includes:
-- a ring wheel (210) fixed with respect to the bottom bracket (10);
-- a sun wheel (220) fixed with respect to the chain wheel (300);
-- and a plurality of planetary wheels (230) arranged in between the ring wheel (210) and the sun wheel (220), the planetary wheels (230) being mounted on a disc-shaped planet carrier (231);
- a reaction torque sensor assembly (270) arranged between the ring wheel (210) and the bottom bracket (10);
wherein the reaction torque sensor assembly (270) comprises a disc (274) having:
- an annular outer ring portion (271, 276), and
- an annular inner ring portion (272, 275);
wherein the annular inner ring portion (272, 275) is fixed coaxially at one end of the bottom bracket (10);
wherein the ring wheel (210) is fixed to the annular outer ring portion (271, 276), at the side of the disc (274) facing away from the bottom bracket (10);
wherein the planet carrier (231) is fixed coaxially to the crank axle (110);
wherein the planetary wheels (230) are mounted for rotation on respective carrier axles (232) that in turn are mounted on the planet carrier (231), at the side of the planet carrier (231) facing away from the bottom bracket (10);
wherein the sun wheel (220) is arranged coaxially around the crank axle (110) such as to be able to rotate with respect to the crank axle (110);
wherein the chain wheel (300) is attached to the sun wheel (220), at the side of the sun wheel (220) facing away from the bottom bracket (10);
wherein the reaction torque sensor assembly (270) further comprises:
- an elastically deformable intermediate deformation part (273) connecting the inner ring portion (272, 275) of said disc (274) and the annular outer ring portion (271, 276) of said disc (274), allowing angular displacement of the outer ring portion (271, 276) with respect to the inner ring portion (272, 275);
- a sensor (280) sensing an angular displacement of the annular outer ring portion (271, 276) with respect to the annular inner ring portion (272, 275) and providing an electrical output signal proportional to the sensed displacement.

2. Crank-driven vehicle or apparatus according to claim 1, wherein the sensor (280) is a deformation sensor (280) sensing a deformation of the intermediate deformation part (273) and providing an electrical output signal proportional to the sensed deformation.

3. Crank-driven vehicle or apparatus according to claim 1, wherein the intermediate deformation part (273) comprises an interruption or a recess between the inner ring portion (272, 275) of said disc (274) and the outer ring portion (271, 276) of said disc (274), and wherein said sensor (280) is adapted to measure the relative displacement of portions of the deformation part (273) at radially opposite sides of the interruption or recess, respectively.

4. Crank-driven vehicle or apparatus according to any of the previous claims, wherein the intermediate deformation part (273) comprises at least one radial spoke.

5. Crank-driven vehicle or apparatus according to claim **4,** wherein the sensor (280) is a deformation sensor (280) sensing a deformation of at least one of said at least one radial spokes (273, 278) and providing an electrical output signal proportional to the sensed deformation.

6. Crank-driven vehicle or apparatus according to claim **4,** wherein at least one of said at least one radial spokes (273, 278) is interrupted, and wherein said sensor (280) is adapted to measure the relative displacement of the spoke portions at opposite sides of the interruption.

7. Crank-driven vehicle or apparatus according to any of claims **1-6,** wherein the crank-driven vehicle is a pedal-driven vehicle, preferably an electrically assisted bicycle.

8. Crank-driven vehicle or apparatus according to claim 7, wherein the crank-driven vehicle is an electrically assisted bicycle comprising an auxiliary electric motor (500) controlled by a controller (400) which receives the measurement signal from the crank torque sensor assembly (200), and wherein the controller (400) is adapted to generate its control signals for the electric motor (500) on the basis of the measurement signal received from the crank torque sensor assembly (200).

9. Replacement kit for replacing a chain wheel of a crank-driven vehicle or apparatus with a bottom bracket, the replacement kit comprising: - a crank set (100) that includes a crank axle (110) mounted for rotation with respect to the bottom bracket (10), a pair of cranks (121; 122) attached to the crank axle (110) and provided with respective user interface members (131; 132); - a chain wheel (300) associated with the crank set (100) and arranged coaxially with respect to the crank axle (110) for driving a chain (3); - a crank torque sensor assembly (200) responsive to torque exerted by the user to provide an electrical measuring, signal proportional to the torque (Ti) exerted by the user;wherein the crank torque sensor assembly (200) comprises - a planetary system (201) that includes: -- a ring wheel (210) fixed with respect to the bottom bracket (10); -- a sun wheel (220) fixed with respect to the chain wheel (300); , -- and a plurality of planetary wheels (230) arranged in between the ring wheel (210) and the sun wheel (220), the planetary wheels (230) being mounted on a disc-shaped planet carrier (231); - a reaction torque sensor assembly (270) arranged between the ring wheel (210) and the bottom bracket (10);'wherein the reaction torque sensor assembly (270) comprises a disc (274) having: - an annular outer ring portion (271, 276), and, - an annular inner ring portion (272, 275);wherein the annular inner ring portion (272, 275) is fixed coaxially at one end of the, bottom bracket (10); wherein the ring wheel (210) is fixed to the annular outer ring portion (271, 276), at the side of the disc (274) facing away from the bottom bracket (10); wherein the planet carrier (231) is fixed coaxially to the crank axle (110); wherein the planetary wheels (230) are mounted for rotation on respective carrier axles (232) that in turn are mounted' on the planet carrier (231), at the side of the planet carrier (231) facing away from the bottom bracket (10); wherein the sun wheel (220) is arranged coaxially around the crank axle (110) such as to be able to rotate with respect to the crank axle (110); wherein the chain wheel (300) is attached to the sun wheel (220), at the side of the sun wheel (220) facing away from the bottom bracket (10); wherein the reaction torque sensor assembly (270) further comprises: - an elastically deformable intermediate deformation part (273) connecting the inner ring portion (272, 275) of said disc (274) and the annular outer ring portion (271, 276) of said disc (274), allowing angular displacement of the outer ring portion (271, 276) with respect to the inner ring portion (272, 275); - a sensor (280) sensing an angular displacement of the annular outer ring portion (271, 276) with respect to the annular inner ring portion (272, 275) and providing an electrical output signal proportional to the sensed displacement.

10. Replacement kit according to claim **9** for replacing a chain wheel having radius R1, wherein the replacement chain wheel (300) has a radius R2, and wherein the following formula applies: $R 2 / R 1 = {R}_{S} / 2 \left({R}_{S}+{R}_{P}\right)$
wherein R_{S} indicates the radius of the sun wheel;
R_{P} indicates the radius of the planetary wheels.

## Patentansprüche

1. Kurbelgetriebenes Fahrzeug oder Gerät (1), umfassend:
- ein Tretlager (10);
- einen Kurbelsatz (100), der eine Kurbelachse (110) umfasst, die zur Drehung in Bezug auf das Tretlager (10) montiert ist, ein Paar Kurbeln (121; 122), die an der Kurbelachse (110) befestigt und mit entsprechenden Benutzerschnittstellenelementen (131; 132) versehen sind;
- ein Kettenrad (300), das mit dem Kurbelsatz (100) verbunden und koaxial in Bezug auf die Kurbelachse (110) angeordnet ist, um eine Kette (3) anzutreiben;
- eine Kurbelwellen-Drehmomentsensorbaugruppe (200), die auf das vom Benutzer ausgeübte Drehmoment anspricht, um ein elektrisches Messsignal bereitzustellen, das proportional zum vom Benutzer ausgeübten Drehmoment (Ti) ist;
wobei die Kurbelwellen-Drehmomentsensorbaugruppe (200) umfasst
- ein Planetensystem (201), das umfasst:
-- ein Ringrad (210), das in Bezug auf das Tretlager (10) feststehend ist;
-- ein Sonnenrad (220), das in Bezug auf das Kettenrad (300) feststehend ist;
-- und eine Vielzahl von Planetenrädern (230), die zwischen dem Ringrad (210) und dem Sonnenrad (220) angeordnet sind, wobei die Planetenräder (230) auf einem scheibenförmigen Planetenträger (231) montiert sind;
- eine Reaktionsdrehmomentsensorbaugruppe (270), die zwischen dem Ringrad (210) und dem Tretlager (10) angeordnet ist;
wobei die Reaktionsdrehmomentsensorbaugruppe (270) eine Scheibe (274) umfasst, die
- einen ringförmigen äußeren Ringabschnitt (271, 276) und
- einen ringförmigen inneren Ringabschnitt (272, 275) hat;
wobei der ringförmige innere Ringabschnitt (272, 275) koaxial an einem Ende des Tretlagers (10) befestigt ist;
wobei das Ringrad (210) an dem ringförmigen äußeren Ringabschnitt (271, 276) an der von dem Tretlager (10) abgewandten Seite der Scheibe (274) befestigt ist;
wobei der Planetenträger (231) koaxial an der Kurbelachse (110) befestigt ist;
wobei die Planetenräder (230) zur Drehung auf entsprechenden Trägerachsen (232) montiert sind, die ihrerseits an der von dem Tretlager (10) abgewandten Seite des Planetenträgers (231) an dem Planetenträger (231) montiert sind;
wobei das Sonnenrad (220) koaxial um die Kurbelachse (110) angeordnet ist, so dass es sich in Bezug auf die Kurbelachse (110) drehen kann;
wobei das Kettenrad (300) an der von dem Tretlager (10) abgewandten Seite des Sonnenrads (220) an dem Sonnenrad (220) befestigt ist;
wobei die Reaktionsdrehmomentsensorbaugruppe (270) ferner umfasst:
- ein elastisch verformbares Verformungszwischenteil (273), das den inneren Ringabschnitt (272, 275) der Scheibe (274) und den ringförmigen äußeren Ringabschnitt (271, 276) der Scheibe (274) verbindet, wodurch eine Winkelverschiebung des äußeren Ringabschnitts (271, 276) in Bezug auf den inneren Ringabschnitt (272, 275) ermöglicht wird;
- einen Sensor (280), der eine Winkelverschiebung des ringförmigen äußeren Ringabschnitts (271, 276) in Bezug auf den ringförmigen inneren Ringabschnitt (272, 275) erfasst und ein elektrisches Ausgangssignal bereitstellt, das proportional zu der erfassten Verschiebung ist.

2. Kurbelgetriebenes Fahrzeug oder Gerät nach Anspruch 1, wobei der Sensor (280) ein Verformungssensor (280) ist, der eine Verformung des Verformungszwischenteils (273) erfasst und ein elektrisches Ausgangssignal bereitstellt, das proportional zu der erfassten Verformung ist.

3. Kurbelgetriebenes Fahrzeug oder Gerät nach Anspruch 1, wobei das Verformungszwischenteil (273) eine Unterbrechung oder eine Aussparung zwischen dem inneren Ringabschnitt (272, 275) der Scheibe (274) und dem äußeren Ringabschnitt (271, 276) der Scheibe (274) aufweist, und wobei der Sensor (280) dazu ausgebildet ist, die relative Verschiebung von Abschnitten des Verformungsteils (273) an radial gegenüberliegenden Seiten der Unterbrechung bzw. Aussparung zu messen.

4. Kurbelgetriebenes Fahrzeug oder Gerät nach einem der vorstehenden Ansprüche, wobei das Verformungszwischenteil (273) mindestens eine radiale Speiche aufweist.

5. Kurbelgetriebenes Fahrzeug oder Gerät nach Anspruch 4, wobei der Sensor (280) ein Verformungssensor (280) ist, der eine Verformung von mindestens einer der mindestens einen radialen Speichen (273, 278) erfasst und ein elektrisches Ausgangssignal bereitstellt, das proportional zu der erfassten Verformung ist.

6. Kurbelgetriebenes Fahrzeug oder Gerät nach Anspruch 4, wobei mindestens eine der mindestens einen radialen Speichen (273, 278) unterbrochen ist, und wobei der Sensor (280) dazu ausgebildet ist, die relative Verschiebung der Speichenabschnitte auf gegenüberliegenden Seiten der Unterbrechung zu messen.

7. Kurbelgetriebenes Fahrzeug oder Gerät nach einem der Ansprüche 1-6, wobei das kurbelgetriebene Fahrzeug ein pedalgetriebenes Fahrzeug, vorzugsweise ein elektrisch unterstütztes Fahrrad, ist.

8. Kurbelgetriebenes Fahrzeug oder Gerät nach Anspruch 7, wobei das kurbelgetriebene Fahrzeug ein elektrisch unterstütztes Fahrrad ist, das einen Hilfs-Elektromotor (500) umfasst, der von einer Steuerung (400) gesteuert wird, die das Messsignal von der Kurbelwellen-Drehmomentsensorbaugruppe (200) empfängt, und wobei die Steuerung (400) ausgebildet ist, ihre Steuersignale für den Elektromotor (500) auf Grundlage des von der Kurbelwellen-Drehmomentsensorbaugruppe (200) empfangenen Messsignals zu erzeugen.

9. Austauschsatz zum Austausch eines Kettenrads eines kurbelgetriebenen Fahrzeugs oder Geräts mit einem Tretlager, wobei der Austauschsatz umfasst: - einen Kurbelsatz (100), der eine Kurbelachse (110), die zur Drehung in Bezug auf das Tretlager (10) montiert ist, ein Paar Kurbeln (121; 122), die an der Kurbelachse (110) befestigt und mit entsprechenden Benutzerschnittstellenelementen (131; 132) versehen sind, umfasst; - ein Kettenrad (300), das mit dem Kurbelsatz (100) verbunden und koaxial in Bezug auf die Kurbelachse (110) angeordnet ist, um eine Kette (3) anzutreiben; - eine Kurbelwellen-Drehmomentsensorbaugruppe (200), die auf das vom Benutzer ausgeübte Drehmoment reagiert, um ein elektrisches Messsignal bereitzustellen, das proportional zu dem vom Benutzer ausgeübten Drehmoment (Ti) ist; wobei die Kurbelwellen-Drehmomentsensorbaugruppe (200) umfasst:- ein Planetensystem (201), das umfasst: -- ein Ringrad (210), das in Bezug auf das Tretlager (10) feststehend ist; -- ein Sonnenrad (220), das in Bezug auf das Kettenrad (300) feststehend ist; , -- und eine Vielzahl von Planetenrädern (230), die zwischen dem Ringrad (210) und dem Sonnenrad (220) angeordnet sind, wobei die Planetenräder (230) auf einem scheibenförmigen Planetenträger (231) montiert sind; - eine Reaktionsdrehmomentsensorbaugruppe (270), die zwischen dem Ringrad (210) und dem Tretlager (10) angeordnet ist; 'wobei die Reaktionsdrehmomentsensorbaugruppe (270) eine Scheibe (274) aufweist, die - einen ringförmigen äußeren Ringabschnitt (271, 276), und - einen ringförmigen inneren Ringabschnitt (272, 275) hat; wobei der ringförmige innere Ringabschnitt (272, 275) koaxial an einem Ende des Tretlagers (10) befestigt ist; wobei das Ringrad (210) an dem ringförmigen äußeren Ringabschnitt (271, 276) an der von dem Tretlager (10) abgewandten Seite der Scheibe (274) befestigt ist; wobei der Planetenträger (231) koaxial an der Kurbelachse (110) befestigt ist; wobei die Planetenräder (230) zur Drehung auf entsprechenden Trägerachsen (232) montiert sind, die ihrerseits an dem Planetenträger (231) an der von dem Tretlager (10) abgewandten Seite des Planetenträgers (231) montiert sind; wobei das Sonnenrad (220) koaxial um die Kurbelachse (110) herum angeordnet ist, so dass es sich in Bezug auf die Kurbelachse (110) drehen kann; wobei das Kettenrad (300) an dem Sonnenrad (220) an der von dem Tretlager (10) abgewandten Seite des Sonnenrads (220) befestigt ist; wobei die Reaktionsdrehmomentsensorbaugruppe (270) ferner umfasst: - ein elastisch verformbares Verformungszwischenteil (273), das den inneren Ringabschnitt (272, 275) der Scheibe (274) und den ringförmigen äußeren Ringabschnitt (271, 276) der Scheibe (274) verbindet, wodurch eine Winkelverschiebung des äußeren Ringabschnitts (271, 276) in Bezug auf den inneren Ringabschnitt (272, 275) ermöglicht wird; - einen Sensor (280), der eine Winkelverschiebung des ringförmigen äußeren Ringabschnitts (271, 276) in Bezug auf den ringförmigen inneren Ringabschnitt (272, 275) erfasst und ein elektrisches Ausgangssignal bereitstellt, das proportional zu der erfassten Verschiebung ist.

10. Austauschsatz nach Anspruch 9 zum Austausch eines Kettenrads mit Radius R1, wobei das Austauschkettenrad (300) einen Radius R2 hat und wobei die folgende Formel gilt: $R 2 / R 1 = Rs / 2 \left(Rs+Rp\right)$
wobei Rs den Radius des Sonnenrades angibt;
Rp den Radius der Planetenräder angibt.

## Revendications

1. Véhicule ou appareil à entraînement par manivelle (1), comprenant :
- un jeu de pédalier (10) ;
- un pédalier (100) qui comporte un axe de manivelle (110) monté en vue d'une rotation par rapport au jeu de pédalier (10), une paire de manivelles (121 ; 122) attachées à l'axe de manivelle (110) et pourvues d'éléments d'interface utilisateur respectifs (131 ; 132) ;
- un plateau (300) associé au pédalier (100) et agencé de façon coaxiale par rapport à l'axe de manivelle (110) pour entraîner une chaîne (3) ;
- un ensemble capteur de couple de manivelle (200) sensible à un couple exercé par l'utilisateur pour fournir un signal de mesure électrique proportionnel au couple (Ti) exercé par l'utilisateur ;
dans lequel l'ensemble capteur de couple de manivelle (200) comprend
- un train planétaire (201) qui comporte :
- une couronne (210) fixe par rapport au jeu de pédalier (10) ;
- un pignon planétaire (220) fixe par rapport au plateau (300) ;
- et une pluralité de pignons satellites (230) agencés entre la couronne (210) et le pignon planétaire (220), les pignons satellites (230) étant montés sur un porte-satellites en forme de disque (231) ;
- un ensemble capteur de couple de réaction (270) agencé entre la couronne (210) et le jeu de pédalier (10) ;
dans lequel l'ensemble capteur de couple de réaction (270) comprend un disque (274) ayant :
- une partie cercle extérieur annulaire (271, 276), et
- une partie cercle intérieur annulaire (272, 275) ;
dans lequel la partie cercle intérieur annulaire (272, 275) est fixée de façon coaxiale au niveau d'une extrémité du jeu de pédalier (10) ;
dans lequel la couronne (210) est fixée à la partie cercle extérieur annulaire (271, 276), au niveau du côté du disque (274) orienté à l'opposé du jeu de pédalier (10) ; dans lequel le porte-satellites (231) est fixé de façon coaxiale à l'axe de manivelle (110) ;
dans lequel les pignons satellites (230) sont montés en vue d'une rotation sur des axes de support respectifs (232) qui sont eux-mêmes montés sur le porte-satellites (231), au niveau du côté du porte-satellites (231) orienté à l'opposé du jeu de pédalier (10) ;
dans lequel le pignon planétaire (220) est agencé de façon coaxiale autour de l'axe de manivelle (110) de manière à pouvoir tourner par rapport à l'axe de manivelle (110) ; dans lequel le plateau (300) est attaché au pignon planétaire (220), au niveau du côté du pignon planétaire (220) orienté à l'opposé du jeu de pédalier (10) ;
dans lequel l'ensemble capteur de couple de réaction (270) comprend en outre :
- une pièce de déformation intermédiaire élastiquement déformable (273) reliant la partie cercle intérieur (272, 275) dudit disque (274) et la partie cercle extérieur annulaire (271, 276) dudit disque (274), permettant un déplacement angulaire de la partie cercle extérieur (271, 276) par rapport à la partie cercle intérieur (272, 275) ;
- un capteur (280) détectant un déplacement angulaire de la partie cercle extérieur annulaire (271, 276) par rapport à la partie cercle intérieur annulaire (272, 275) et fournissant un signal de sortie électrique proportionnel au déplacement détecté.

2. Véhicule ou appareil à entraînement par manivelle selon la revendication 1, dans lequel le capteur (280) est un capteur de déformation (280) détectant une déformation de la pièce de déformation intermédiaire (273) et fournissant un signal de sortie électrique proportionnel à la déformation détectée.

3. Véhicule ou appareil à entraînement par manivelle selon la revendication 1, dans lequel la pièce de déformation intermédiaire (273) comprend une interruption ou un évidement entre la partie cercle intérieur (272, 275) dudit disque (274) et la partie cercle extérieur (271, 276) dudit disque (274), et dans lequel ledit capteur (280) est conçu pour mesurer le déplacement relatif de parties de la pièce de déformation (273) au niveau de côtés radialement opposés de l'interruption ou évidement, respectivement.

4. Véhicule ou appareil à entraînement par manivelle selon l'une quelconque des revendications précédentes, dans lequel la pièce de déformation intermédiaire (273) comprend au moins un rayon radial.

5. Véhicule ou appareil à entraînement par manivelle selon la revendication 4, dans lequel le capteur (280) est un capteur de déformation (280) détectant une déformation d'au moins un rayon parmi ledit au moins un rayon radial (273, 278) et fournissant un signal de sortie électrique proportionnel à la déformation détectée.

6. Véhicule ou appareil à entraînement par manivelle selon la revendication 4, dans lequel au moins un rayon parmi ledit au moins un rayon radial (273, 278) est interrompu, et dans lequel ledit capteur (280) est conçu pour mesurer le déplacement relatif des parties de rayon au niveau de côtés opposés de l'interruption.

7. Véhicule ou appareil à entraînement par manivelle selon l'une quelconque des revendications 1 à 6, le véhicule à entraînement par manivelle étant un véhicule à entraînement par pédales, de préférence une bicyclette à assistance électrique.

8. Véhicule ou appareil à entraînement par manivelle selon la revendication 7, le véhicule à entraînement par manivelle étant une bicyclette à assistance électrique comprenant un moteur électrique auxiliaire (500) commandé par un organe de commande (400) qui reçoit le signal de mesure provenant de l'ensemble capteur de couple de manivelle (200), et dans lequel l'organe de commande (400) est conçu pour générer ses signaux de commande pour le moteur électrique (500) sur la base du signal de mesure reçu en provenance de l'ensemble capteur de couple de manivelle (200).

9. Kit de remplacement destiné à remplacer un plateau d'un véhicule ou appareil à entraînement par manivelle doté d'un jeu de pédalier, le kit de remplacement comprenant :
- un pédalier (100) qui comporte un axe de manivelle (110) monté en vue d'une rotation par rapport au jeu de pédalier (10), une paire de manivelles (121 ; 122) attachées à l'axe de manivelle (110) et pourvues d'éléments d'interface utilisateur respectifs (131 ; 132) ;
- un plateau (300) associé au pédalier (100) et agencé de façon coaxiale par rapport à l'axe de manivelle (110) pour entraîner une chaîne (3) ;
- un ensemble capteur de couple de manivelle (200) sensible à un couple exercé par l'utilisateur pour fournir un signal de mesure électrique proportionnel au couple (Ti) exercé par l'utilisateur ;
dans lequel l'ensemble capteur de couple de manivelle (200) comprend
- un train planétaire (201) qui comporte :
- une couronne (210) fixe par rapport au jeu de pédalier (10) ;
- un pignon planétaire (220) fixe par rapport au plateau (300) ;
- et une pluralité de pignons satellites (230) agencés entre la couronne (210) et le pignon planétaire (220), les pignons satellites (230) étant montés sur un porte-satellites en forme de disque (231) ;
- un ensemble capteur de couple de réaction (270) agencé entre la couronne (210) et le jeu de pédalier (10) ;
dans lequel l'ensemble capteur de couple de réaction (270) comprend un disque (274) ayant :
- une partie cercle extérieur annulaire (271, 276), et
- une partie cercle intérieur annulaire (272, 275) ;
dans lequel la partie cercle intérieur annulaire (272, 275) est fixée de façon coaxiale au niveau d'une extrémité du jeu de pédalier (10) ;
dans lequel la couronne (210) est fixée à la partie cercle extérieur annulaire (271, 276), au niveau du côté du disque (274) orienté à l'opposé du jeu de pédalier (10) ; dans lequel le porte-satellites (231) est fixé de façon coaxiale à l'axe de manivelle (110) ;
dans lequel les pignons satellites (230) sont montés en vue d'une rotation sur des axes de support respectifs (232) qui sont eux-mêmes montés sur le porte-satellites (231), au niveau du côté du porte-satellites (231) orienté à l'opposé du jeu de pédalier (10) ;
dans lequel le pignon planétaire (220) est agencé de façon coaxiale autour de l'axe de manivelle (110) de manière à pouvoir tourner par rapport à l'axe de manivelle (110) ; dans lequel le plateau (300) est attaché au pignon planétaire (220), au niveau du côté du pignon planétaire (220) orienté à l'opposé du jeu de pédalier (10) ;
dans lequel l'ensemble capteur de couple de réaction (270) comprend en outre :
- une pièce de déformation intermédiaire élastiquement déformable (273) reliant la partie cercle intérieur (272, 275) dudit disque (274) et la partie cercle extérieur annulaire (271, 276) dudit disque (274), permettant un déplacement angulaire de la partie cercle extérieur (271, 276) par rapport à la partie cercle intérieur (272, 275) ;
- un capteur (280) détectant un déplacement angulaire de la partie cercle extérieur annulaire (271, 276) par rapport à la partie cercle intérieur annulaire (272, 275) et fournissant un signal de sortie électrique proportionnel au déplacement détecté.

10. Kit de remplacement selon la revendication 9 destiné à remplacer un plateau ayant un rayon R1, dans lequel le plateau de remplacement (300) a un rayon R2, et dans lequel la formule suivante s'applique : $R 2 / R 1 = RS / 2 \left({R}_{S}+{R}_{P}\right)$
dans laquelle Rs indique le rayon du pignon planétaire ;
R_{P} indique le rayon des pignons satellites.
